# FASCICULE DE BREVET EUROPEEN

(11) **EP 2 950 457 B1**
(45) Date de publication et mention de la délivrance du brevet: **16.05.2018**
(21) Numéro de dépôt: 15169565.7
(22) Date de dépôt: 28.05.2015
(51) Int. Cl.: H04B 5/00, H01Q 13/20, B61L 3/22, H01Q 1/32, H01Q 1/46, H01Q 13/08

(54) **SYSTÈME DE COMMUNICATION DE DONNÉES, SYSTÈME FERROVIAIRE COMPRENANT UN TEL SYSTÈME DE COMMUNICATION ET PROCÉDÉ DE COMMUNICATION ASSOCIÉ**
DATENÜBERTRAGUNGSSYSTEM, EISENBAHNSYSTEM, DAS EIN SOLCHES ÜBERTRAGUNGSSYSTEM UMFASST, UND ENTSPRECHENDES ÜBERTRAGUNGSVERFAHREN
DATA COMMUNICATION SYSTEM, RAILWAY SYSTEM COMPRISING SUCH A COMMUNICATION SYSTEM AND RELATED COMMUNICATION METHOD

(30) Priorité: 28.05.2014 FR 1454892
(43) Date de publication de la demande: 02.12.2015
(73) Titulaire: ALSTOM Transport Technologies, 93400 Saint-Ouen (FR)
(72) Inventeur: Comte, Renaud, 38080 SAINT ALBAN DE ROCHE (FR)
(74) Mandataire: Lavoix

(56) Documents cités:
- WO-A2-2006/050331
- US-A- 3 590 383
- US-B1- 8 237 617

## Description

L'invention concerne un système de communication de données comprenant un premier module d'émission-réception de données sous forme d'un signal radioélectrique et une première antenne radioélectrique d'émission-réception, connectée au premier module d'émission-réception et adaptée pour être disposée à proximité d'un conducteur électrique, la première antenne d'émission-réception étant configurée pour émettre, respectivement recevoir, le signal radioélectrique sous forme d'ondes radioélectriques de surface se propageant le long du conducteur électrique. Le système de communication comprend en outre une deuxième antenne radioélectrique d'émission-réception, et un deuxième module d'émission-réception de données, adapté pour échanger des données avec le premier module d'émission-réception, le deuxième module d'émission-réception étant connecté à la deuxième antenne.

L'invention concerne également un système ferroviaire, comprenant un réseau électrique ferroviaire comportant au moins une caténaire, chaque caténaire comportant un conducteur électrique, au moins un véhicule ferroviaire destiné à se déplacer le long du réseau ferroviaire, et un tel système de communication de données.

L'invention concerne également un procédé de communication de données sous forme d'un signal radioélectrique au sein d'un tel système de communication de données.

L'invention concerne le domaine des radiocommunications pour lesquelles le signal radioélectrique est transmis au moins partiellement sous forme d'ondes de surface se propageant le long du conducteur électrique. On connaît du document US 3590383A (NAKAHARA TSUNEO ET AL) un système de communication de données par ondes de surface. On connaît du document WO 2006/050331 A2 de tels système et procédé de communication de données, couplés à un réseau électrique. Le réseau électrique comporte une pluralité de conducteurs électriques reliés électriquement les uns aux autres, chaque conducteur étant disposé entre deux éléments de maintien du conducteur, et chaque élément de maintien étant solidaire d'un mât vertical.

Le système de communication comprend une antenne d'émission fixée à un élément de support et disposée à proximité du conducteur électrique pour émettre un signal radioélectrique se couplant sous forme d'ondes de surface le long de ce conducteur électrique. Le système de communication comprend également plusieurs couples d'antennes relais, chaque couple d'antennes relais comportant une antenne de réception configurée pour recevoir des ondes de surface se propageant le long d'un premier conducteur électrique et une antenne d'émission reliée à l'antenne de réception correspondante et configurée pour retransmettre ledit signal radioélectrique sous forme d'ondes de surface destinées à se propager le long d'un deuxième conducteur électrique. Le système de communication comprend en outre une antenne de réception configurée pour recevoir, en une extrémité du réseau électrique située à l'opposé de l'antenne d'émission, le signal radioélectrique émis par l'antenne d'émission. L'antenne de réception est également disposée à proximité d'un conducteur électrique correspondant et est configurée pour recevoir ledit signal sous forme des ondes de surface se propageant le long des conducteurs électriques du réseau. L'antenne de réception située à l'extrémité du réseau est en outre connectée à un dispositif central de communication via des moyens radioélectriques classiques de communication.

Lorsqu'un utilisateur souhaite se connecter au système de communication, par exemple pour transmettre des données, il s'approche d'un mât du réseau électrique et transmet lesdites données à une antenne d'émission fixée à un élément de maintien via un premier émetteur-récepteur radioélectrique contenu dans un appareil électronique à sa disposition et un deuxième émetteur-récepteur radioélectrique connecté à l'antenne d'émission. La première partie de la transmission de données s'effectue alors sous forme d'ondes radioélectriques transmises entre le premier émetteur-récepteur et le deuxième émetteur-récepteur, et la partie suivante de la transmission des données est effectuée via la transmission d'ondes de surface le long des différents conducteurs électriques dudit réseau.

Autrement dit, l'utilisateur se connecte localement à une antenne et à des moyens radioélectriques, puis les données sont transmises le long des conducteurs électriques sous forme d'ondes de surface.

Toutefois, un tel système de communication n'est pas toujours très pratique pour l'utilisateur, celui-ci devant se connecter localement à l'une des antennes d'émission située à proximité d'un conducteur électrique.

Le but de l'invention est donc de proposer un système de communication permettant de faciliter la transmission de données via ce système, tout en utilisant des conducteurs électriques pour effectuer cette transmission au moins en partie sous forme d'ondes de surface se propageant le long des conducteurs électriques du réseau électrique.

A cet effet, l'invention a pour objet un système de communication selon la revendication 1.

Suivant d'autres aspects avantageux de l'invention, le système de communication de données est selon les revendications dépendantes 2 à 11.

L'invention a également pour objet un système ferroviaire selon la revendication 12.

Selon un autre aspect avantageux, le système ferroviaire est selon la revendication 13.

L'invention a également pour objet un procédé de communication de données selon la revendication 14.

Ces caractéristiques et avantages de l'invention apparaîtront à la lecture de la description qui va suivre, donnée uniquement à titre d'exemple non limitatif, et faite en référence aux dessins annexés, sur lesquels :

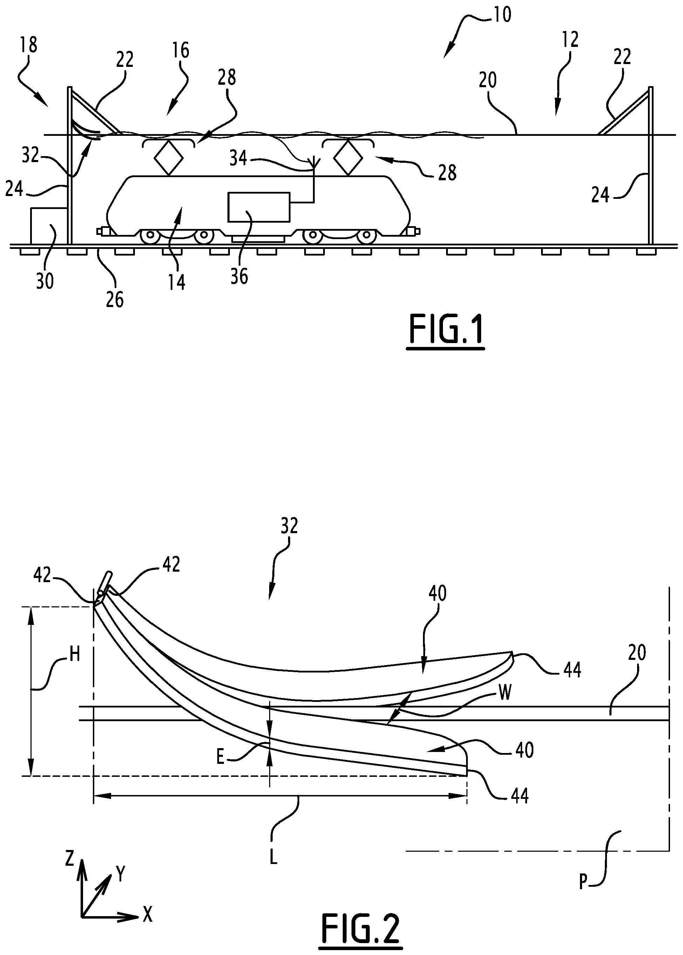

- la figure 1 est une représentation schématique d'un système ferroviaire selon un premier mode de réalisation, le système ferroviaire comprenant un réseau électrique ferroviaire, un véhicule ferroviaire destiné à se déplacer le long du réseau ferroviaire, et un système de communication de données, le système de communication de données comportant notamment une première antenne d'émission-réception disposée à proximité d'un conducteur électrique du réseau et configurée pour émettre, respectivement recevoir, un signal radioélectrique sous forme d'ondes de surface se propageant le long des conducteurs électriques dudit réseau ;
- la figure 2 est une représentation schématique de la première antenne de la figure 1 ;
- la figure 3 est un organigramme d'un procédé de communication de données selon l'invention ;
- la figure 4 est une vue analogue à celle de la figure 1 selon un deuxième mode de réalisation de l'invention ; et
- la figure 5 est vue analogue à celle de la figure 2 selon le deuxième mode de réalisation de l'invention.

Sur la figure 1, un système ferroviaire 10 comprend un réseau électrique ferroviaire 12, une pluralité de véhicules ferroviaires 14 et un système 16 de communication de données. Un seul véhicule ferroviaire 14 est représenté sur la figure 1 afin de simplifier les dessins, et chaque véhicule ferroviaire 14 est destiné à se déplacer le long du réseau ferroviaire 12.

Le réseau électrique ferroviaire 12 comporte au moins une caténaire 18, chaque caténaire 18 comportant une pluralité de conducteurs électriques 20, les conducteurs électriques 20 étant reliés les uns aux autres pour assurer une continuité de la transmission d'un courant électrique à travers eux.

Le réseau électrique ferroviaire 12 comporte également des éléments 22 de maintien des conducteurs électriques 20 de la caténaire 18, ainsi que des mâts verticaux 24 auxquels sont fixés les éléments de maintien 22. Les mâts verticaux 24 permettent alors de disposer les conducteurs électriques 20 à une hauteur prédéterminée par rapport au sol sur lequel sont fixés des rails 26 pour la circulation des véhicules ferroviaires 14.

Chaque véhicule ferroviaire 14 est connu en soi, et est adapté pour rouler sur les rails 26 le long du réseau électrique ferroviaire 12. Les véhicules ferroviaires 14 peuvent utiliser tout type d'alimentation, soit externe, du type alimentation électrique par caténaire ou par un rail additionnel par exemple, soit interne, du type diesel par exemple.

Dans l'exemple de réalisation illustré sur la figure 1, chaque véhicule ferroviaire 14 est adapté pour être alimenté électriquement via le conducteur électrique 20 correspondant de la caténaire 18. Chaque véhicule ferroviaire 14 comporte par exemple des pantographes 28, chacun étant configuré pour être en contact avec un conducteur électrique 20 correspondant.

Le système de communication de données 16 comprend un premier module 30 d'émission-réception de données sous forme d'un signal radioélectrique et une première antenne radioélectrique d'émission-réception 32 connectée au premier module d'émission-réception 30 et disposée à proximité d'un conducteur électrique 20. La première antenne d'émission-réception 32 est configurée pour émettre, respectivement pour recevoir, le signal radioélectrique sous forme d'ondes de surface se propageant le long du conducteur électrique 20 correspondant.

Le système de communication de données 16 comprend également une deuxième antenne radioélectrique d'émission-réception 34 et un deuxième module d'émission-réception de données 36, adapté pour échanger des données avec le premier module d'émission-réception 30. Le deuxième module d'émission-réception 36 est connecté à la deuxième antenne d'émission-réception 34.

Dans l'exemple de réalisation de la figure 1, le véhicule ferroviaire 14 comporte la deuxième antenne radioélectrique d'émission-réception 34 et le deuxième module d'émission-réception 36, le deuxième module d'émission-réception 36 étant connecté à la deuxième antenne 34 et adapté pour recevoir des données émises par le premier module d'émission-réception 30.

Les conducteurs électriques 20 appartiennent également au système de communication de données 16, les conducteurs électriques 20 participant à la transmission des données sous forme de signal radioélectrique, en servant de support de propagation aux ondes de surface émises, respectivement reçues, par la première antenne 32.

Chaque conducteur électrique 20 s'étend suivant une direction longitudinale X, comme représenté sur la figure 2.

Le premier module d'émission-réception 30 est connu en soi, et est adapté pour convertir les données à transmettre en un signal électrique transmis à la première antenne 32, respectivement pour convertir un signal électrique reçu de la première antenne 32 en données.

La première antenne 32 est alors adaptée pour transformer ledit signal électrique reçu de la part du premier module d'émission-réception 30 en un signal radioélectrique émis sous forme d'ondes de surface le long du conducteur électrique 20 correspondant, respectivement pour transformer un signal radioélectrique reçu sous forme d'ondes de surface le long du conducteur électrique 20 correspondant en un signal électrique émis vers le premier module d'émission-réception 30.

La première antenne 32 est disposée suffisamment près du conducteur électrique 20 pour permettre une propagation, le long du conducteur électrique 20, des ondes de surface, et de manière générale pour avoir un bon couplage avec le conducteur électrique 20. La première antenne 32 est par exemple disposée à moins de 50 cm du conducteur électrique 20 correspondant, de préférence encore à moins de 20 cm dudit conducteur 20.

La première antenne 32 est par exemple fixe par rapport au conducteur électrique 20 correspondant. Autrement dit, la position de la première antenne 32 est inchangée par rapport à celle du conducteur électrique 20 correspondant, notamment par rapport à la position des éléments de maintien 22.

Dans le premier mode de réalisation décrit, seule la première antenne d'émission-réception 32 est disposée à proximité du conducteur électrique 20 correspondant, comme représenté sur la figure 1. Autrement dit, la seule antenne disposée à proximité du conducteur électrique 20 est la première antenne 32, celle-ci étant de préférence située à moins de 50 cm dudit conducteur électrique 20.

La première antenne 32 comporte deux éléments actifs 40 disposés le long du conducteur électrique 20 correspondant, et de part et d'autre dudit conducteur 20, comme représenté sur la figure 2.

La première antenne 32 est solidaire du mât 24, ou, en variante non représentée, d'un élément de maintien 22, et le premier module d'émission-réception 30 est, par exemple, disposé à proximité de la base du mât 24 associé à cet élément de maintien 22.

Selon l'invention, la deuxième antenne d'émission-réception 34 est disposée à l'écart des conducteurs électriques 20, de préférence à une distance supérieure à 0,5 mètre du conducteur électrique 20 le plus proche, comme représenté sur la figure 1. En complément, la deuxième antenne d'émission-réception 34 est, par exemple, située à une distance inférieure à 1,5 m du conducteur électrique 20 le plus proche.

La deuxième antenne d'émission-réception 34 est en outre configurée pour capter des ondes qui parmi les ondes de surface émises le long du conducteur électrique 20, sont rayonnées ensuite à l'écart du conducteur électrique 20 et directement depuis celui-ci, respectivement configurée pour émettre des ondes radioélectriques, certaines des ondes émises par la deuxième antenne 34 étant destinées à se propager le long du conducteur électrique 20 sous forme d'ondes radioélectriques de surface.

La deuxième antenne d'émission-réception 34 qui est configurée pour capter des ondes rayonnées à l'écart du conducteur électrique 20 correspondant, respectivement configurée pour émettre des ondes vers le conducteur électrique 20 correspondant, est par exemple une antenne dipolaire, ou une antenne quart d'onde, ou encore une antenne à fente.

En variante, la deuxième antenne 34 est une antenne directive, c'est-à-dire focalisée, telle qu'une antenne en hélice, une antenne patch ou encore une antenne cornet. La deuxième antenne 34 est alors de préférence destinée à être pointée en direction du conducteur électrique 20, de préférence encore dirigée selon une direction sensiblement perpendiculaire à celle du conducteur électrique 20.

La deuxième antenne 34 est par exemple mobile par rapport au conducteur électrique 20 selon la direction longitudinale X. Autrement dit, la position de la deuxième antenne 34 varie selon la direction longitudinale X par rapport à celle du conducteur électrique 20, notamment par rapport à la position des éléments de maintien 22.

Le deuxième module d'émission-réception 36 est connu en soi, et permet de convertir un signal électrique reçu de la deuxième antenne 34 à laquelle il est relié, en données correspondantes, respectivement de convertir des données en un signal électrique émis vers la deuxième antenne 34, permettant d'échanger ainsi des données avec le premier module d'émission-réception 30.

Sur la figure 2, les éléments actifs 40 sont de préférence de forme identique, et disposés de manière symétrique par rapport à un plan vertical P contenant le conducteur électrique 20 correspondant.

Chaque élément actif 40 comporte une première extrémité 42 et une deuxième extrémité 44 suivant la direction longitudinale X. Chaque élément actif 40 présente une longueur L entre les première et deuxième extrémités 42, 44 suivant la direction longitudinale X. La longueur L est, par exemple, comprise entre 5 cm et 30 cm, de préférence égale à 20 cm, ces longueurs étant fonction de la fréquence choisie.

Chaque élément actif 40 présente une hauteur H selon une direction verticale Z perpendiculaire à la direction longitudinale X. La hauteur H est, par exemple, comprise entre 5 cm et 30 cm, de préférence égale à 30 cm

Chaque élément actif 40 présente de préférence un profil recourbé suivant un plan vertical parallèle au conducteur électrique 20, c'est-à-dire suivant un plan contenant les directions longitudinale X et verticale Z, comme représenté sur la figure 2. Le profil courbé de chaque élément actif 40 est de préférence concave par rapport au conducteur électrique 20.

Un espacement W est présent entre les éléments actifs 40 d'une même antenne, l'espacement étant défini selon une direction transversale Y perpendiculaire au plan vertical contenant les directions longitudinale X et verticale Z. L'espacement W est, par exemple, comprise entre 0,5 cm et 10 cm. L'espacement W est de valeur variable entre les première et deuxième extrémités 42, 44, pour assurer une transition sans rupture depuis l'impédance d'alimentation en la première extrémité 42, par exemple égale à 50 ohms, jusqu'à l'impédance de propagation en la deuxième extrémité 44, par exemple égale à 377 ohms.

Chaque élément actif 40 présente alors, de préférence, une forme allongée selon la direction longitudinale X, tout en ayant un profil recourbé suivant le plan vertical parallèle au conducteur électrique 20.

Cette forme particulière de chacun des éléments actifs 40 permet d'avoir la première extrémité 42 de l'élément actif fixée à un élément de maintien 22 correspondant, tout en ayant la deuxième extrémité 44 de l'élément actif disposée à une altitude selon la direction verticale Z sensiblement égale à l'altitude du conducteur électrique 20, de par le profil courbé de chaque élément actif 40.

Chaque élément actif 40 permet également, de par sa forme allongée selon la direction longitudinale X, de faciliter, tant en émission qu'en réception, le couplage avec des ondes de surface le long du conducteur électrique 20.

L'ensemble des deux éléments actifs 40 de la première antenne 32 présente en outre une forme générale conique depuis les premières extrémités 42 des éléments actifs en direction des deuxièmes extrémités 44, ce qui permet de faciliter encore la propagation des ondes de surface le long du conducteur électrique 20.

Chaque élément actif 40 est par exemple réalisé à partir d'un élément électriquement conducteur qui est initialement plan et présente une épaisseur E par exemple comprise entre 0,5 cm et 3 cm, de préférence égale à 1cm. Cet élément électriquement conducteur qui est initialement plan, est ensuite recourbé afin d'obtenir le profil courbé des éléments actifs 40.

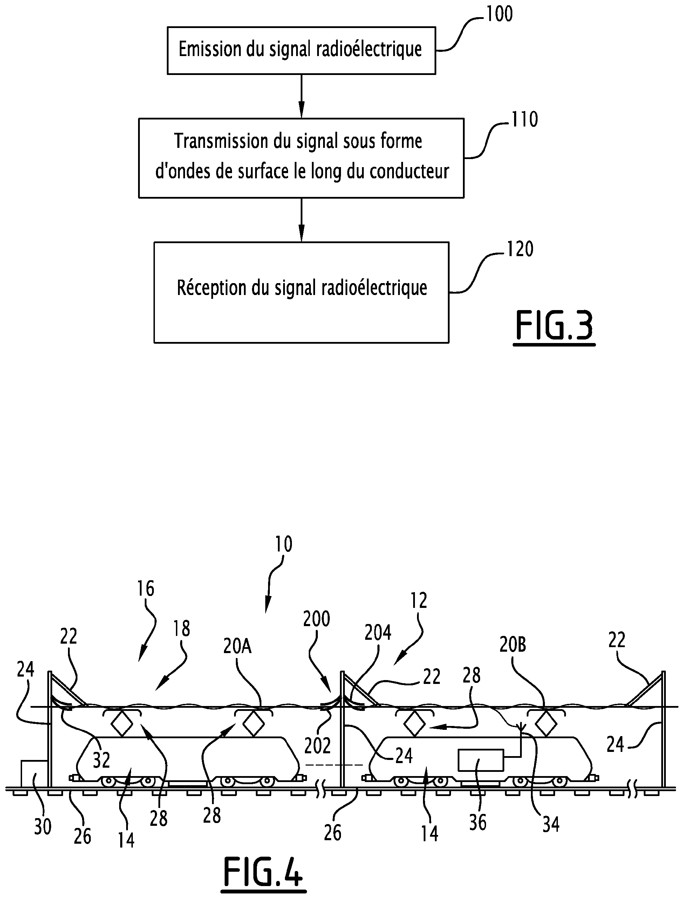

Le fonctionnement du système de communication 16 selon l'invention va être à présent décrit à l'aide de la figure 3 représentant un organigramme d'un procédé de communication selon l'invention. Pour des questions de simplification, le chemin descendant, qui dans la suite de la description correspond, par convention, au chemin depuis le premier module 30 jusqu'au deuxième module 36, est d'abord décrit, puis le chemin montant sera ensuite décrit. Le chemin montant correspond, par convention et par analogie, au chemin depuis le deuxième module 36 jusqu'au premier module 30, le système de communication 16 étant parfaitement réciproque.

Pour le chemin descendant, lors de l'étape initiale 100, un signal radioélectrique est émis via le premier module d'émission-réception 30 couplé à la première antenne 32, sous forme d'ondes de surface se propageant le long du conducteur électrique 20 correspondant, la première antenne 32 étant disposée à proximité du conducteur électrique 20.

Le signal radioélectrique se propage alors lors de l'étape 110 sous forme d'ondes de surface le long de ce conducteur électrique 20, et depuis la première antenne 32. Lors de cette étape de transmission 110, au fur et à mesure que les ondes se propagent à la surface du conducteur électrique 20, certaines de ces ondes sont progressivement rayonnées de plus en plus à l'écart du conducteur électrique 20 et directement depuis ledit conducteur électrique 20.

La deuxième antenne d'émission-réception 34 est alors apte, lors de l'étape 120, à recevoir lesdites ondes rayonnées à l'écart du conducteur électrique 20, la deuxième antenne 34 étant disposée à l'écart dudit conducteur électrique 20 et configurée pour capter ces ondes rayonnées.

Lors de cette étape de réception 120, le signal radioélectrique reçu par la deuxième antenne 34 est alors transmis au deuxième module d'émission-réception 36 pour être converti en un signal électrique délivré en sortie du deuxième module d'émission-réception 36. Les données émises par le premier module d'émission-réception 30 et la première antenne 32 sont ainsi reçues directement à l'intérieur du véhicule ferroviaire 14 par l'intermédiaire du deuxième module d'émission-réception 36 couplé à la deuxième antenne 34.

Pour le chemin montant, lors de l'étape d'émission 100, un signal radioélectrique est émis via le deuxième module d'émission-réception 36 couplé à la deuxième antenne 34, sous forme d'ondes radioélectriques, certaines des ondes émises par la deuxième antenne 34 étant destinées à se propager sous forme d'ondes radioélectriques de surface le long du conducteur électrique 20 correspondant.

Le signal radioélectrique se propage alors lors de l'étape 110 sous forme d'ondes de surface le long de ce conducteur électrique 20, et vers la première antenne 32. Lors de cette étape de transmission 110, les ondes se propagent à la surface du conducteur électrique 20 en direction de la première antenne 32.

La première antenne 32 est alors apte, lors de l'étape de réception 120, à recevoir lesdites ondes de surface se propageant le long de ce conducteur électrique 20, la première antenne 32 étant disposée à proximité dudit conducteur électrique 20 et configurée pour capter ces ondes de surface.

Lors de cette étape de réception 120, le signal radioélectrique reçu par la première antenne 32 est alors transmis au premier module d'émission-réception 30 pour être converti en un signal électrique délivré en sortie du premier module d'émission-réception 30. Les données émises par le deuxième module d'émission-réception 36 et la deuxième antenne 34 sont ainsi reçues par le premier module d'émission-réception 30 connecté à la première antenne 32.

Ceci permet alors de faciliter la communication des données tout en conservant, sur une partie du chemin entre le premier module d'émission-réception 30 et le deuxième module d'émission-réception 36, la transmission des ondes radioélectriques sous forme d'ondes de surface le long du conducteur électrique 20. Ceci permet alors d'obtenir une portée importante pour la transmission du signal radioélectrique, tout en facilitant la réception des données à l'intérieur du véhicule ferroviaire 14, respectivement l'émission des données depuis l'intérieur du véhicule ferroviaire 14.

Contrairement au système de communication de l'état de la technique, le système de communication 16 selon l'invention ne requiert pas pour l'utilisateur de se connecter localement via des moyens de radiocommunication à une antenne d'émission-réception d'ondes de surface située à proximité d'un mât du réseau électrique ferroviaire. Le système de communication 16 selon l'invention facilite alors la réception, respectivement l'émission, des données en tout point du conducteur électrique 20.

Au niveau du véhicule ferroviaire, le système de communication 16 permet l'utilisation d'antennes classiques, la deuxième antenne d'émission-réception 34 étant par exemple de type omnidirectionnelle.

En variante, pour obtenir de meilleures performances, la deuxième antenne d'émission-réception 34 est de préférence directive, ou focalisée, pointant en direction du conducteur électrique 20.

Le fait de disposer la deuxième antenne d'émission-réception 34 à l'écart des conducteurs électriques 20, de préférence à une distance supérieure à 50 cm du conducteur électrique 20 le plus proche, permet en outre d'avoir une distance de sécurité entre le véhicule ferroviaire 14 et le conducteur électrique 20, lorsque la deuxième antenne d'émission-réception 34 est fixée au véhicule ferroviaire 14.

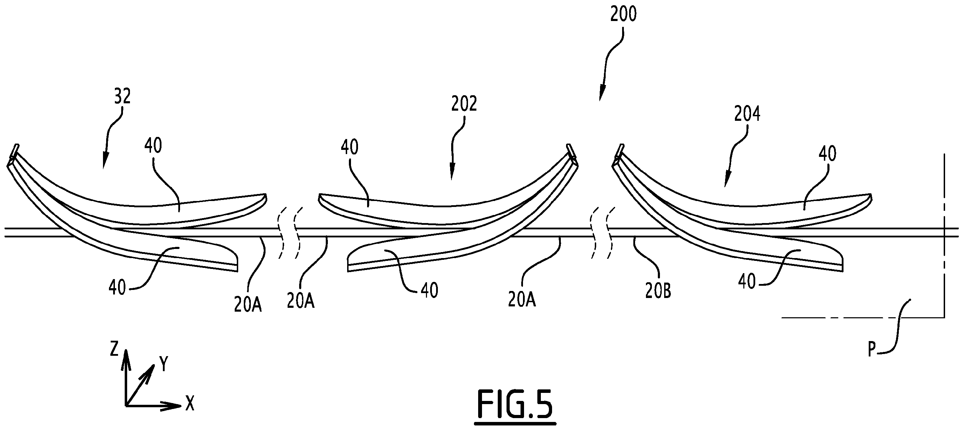

Les figures 4 et 5 illustrent un deuxième mode de réalisation de l'invention, pour lequel les éléments identiques à ceux du premier mode de réalisation, décrit précédemment, sont repérés par des références identiques, et ne sont pas décrits à nouveau.

Selon ce deuxième mode de réalisation, le système de communication 16 comprend en outre au moins un couple 200 d'antennes relais, chaque couple d'antennes relais 200 comportant une première antenne relais d'émission-réception 202 configurée pour recevoir, respectivement retransmettre, des ondes de surface se propageant le long d'un premier conducteur électrique 20A et une deuxième antenne relais d'émission-réception 204. La deuxième antenne relais d'émission-réception 204 est reliée à la première antenne relais d'émission-réception 202 correspondante dudit couple d'antennes 200, et est configurée pour retransmettre, respectivement recevoir, des ondes de surface se propageant le long d'un deuxième conducteur électrique 20B, les ondes de surface le long du premier conducteur 20A correspondant aux ondes de surface le long du deuxième conducteur électrique 20B.

Pour chaque couple d'antennes relais 200, la première antenne relais d'émission-réception 202 et la deuxième antenne relais d'émission-réception 204 présentent chacune une forme analogue à celle de la première antenne d'émission-réception 32.

La première antenne relais de réception 202 et la deuxième antenne relais d'émission-réception 204 présentent, par exemple, la forme de la première antenne 32 décrite précédemment en regard de la figure 2, et comportent alors chacune les deux éléments actifs 40, comme représenté sur la figure 5.

Dans l'exemple de réalisation de la figure 4, la première antenne d'émission-réception 32 et la première antenne relais 202 sont chacune disposées en une extrémité du premier conducteur électrique 20A en s'étendant globalement selon la direction longitudinale X et en étant orientées suivant des sens opposés.

La deuxième antenne relais 204, couplée à la première antenne relais 202 située à proximité du premier conducteur électrique 20A, est quant à elle située à proximité du deuxième conducteur électrique 20B, en étant orientée suivant le même sens que la première antenne d'émission-réception 32, tout en s'étendant également globalement suivant la direction longitudinale X.

Le couple d'antennes relais 200 permet alors de retransmettre les ondes de surface se propageant initialement le long du premier conducteur 20A vers le deuxième conducteur électrique 20B, et inversement de retransmettre les ondes de surface se propageant initialement le long du deuxième conducteur électrique 20B vers le premier conducteur 20A.

Pour le chemin descendant, la première antenne relais 202 est propre à capter les ondes de surface se propageant le long du premier conducteur 20A, puis la deuxième antenne relais 204 qui est couplée à la première antenne relais 202 est propre à retransmettre ce même signal radioélectrique sous forme d'ondes de surface se propageant le long du deuxième conducteur électrique 20B.

Inversement, pour le chemin montant, la deuxième antenne relais 204 est propre à capter les ondes de surface se propageant le long du deuxième conducteur 20B, puis la première antenne relais 202 qui est couplée à la deuxième antenne relais 204 est propre à retransmettre ce même signal radioélectrique sous forme d'ondes de surface se propageant le long du premier conducteur électrique 20A, à destination de la première antenne d'émission-réception 32.

Les antennes relais 202, 204 sont alors également appelées antennes de retransmission, ou encore antennes répétitrices, ces antennes 202, 204 permettant de répéter le long du deuxième conducteur 20B le signal radioélectrique se propageant initialement le long du premier conducteur 20A sous forme d'ondes de surface, et réciproquement le long du premier conducteur 20A le signal radioélectrique se propageant initialement le long du deuxième conducteur 20B sous forme d'ondes de surface.

Chaque couple d'antennes relais 200 permet alors d'augmenter encore la distance de propagation du signal radioélectrique le long des conducteurs électriques 20A, 20B, c'est-à-dire d'augmenter de manière générale la portée de transmission du signal radioélectrique via ce système de communication de données 16.

Chaque couple d'antennes relais 200 est solidaire d'au moins un élément de maintien 22, et est alors de préférence disposé à proximité d'un mât du réseau électrique ferroviaire 12.

Le fonctionnement du système de communication 16 selon ce deuxième mode de réalisation est alors analogue celui du système de communication 16 selon le premier mode de réalisation.

Pour le chemin descendant, l'émission du signal radioélectrique est toujours effectuée via la première antenne d'émission-réception 32 associée au premier module d'émission-réception 30, et la réception finale des données est toujours effectuée via la deuxième antenne d'émission-réception 34 couplée au deuxième module d'émission-réception 36, avec la deuxième antenne d'émission-réception 34 disposée à l'écart des différents conducteurs électriques 20A, 20B.

Réciproquement, pour le chemin montant, l'émission du signal radioélectrique est effectuée via la deuxième antenne d'émission-réception 34 associée au deuxième module d'émission-réception 36, et la réception finale des données est effectuée via la première antenne d'émission-réception 32 couplée au premier module d'émission-réception 30.

Selon ce deuxième mode de réalisation, l'étape de transmission 110 comporte en outre une retransmission des ondes de surface d'un conducteur électrique 20A à l'autre conducteur électrique 20B par l'intermédiaire d'un couple d'antennes relais 200 correspondant, chaque couple d'antennes relais 200 permettant de faire se propager les ondes de surface d'un conducteur électrique à l'autre.

Les avantages de ce deuxième mode de réalisation comprennent les avantages du premier mode de réalisation décrit précédemment.

Le système de communication 16 selon ce deuxième mode de réalisation permet en outre d'augmenter la portée de la transmission des données sous forme de signaux radioélectriques, de par les couples d'antennes relais 200 capables d'assurer une continuité dans la propagation des ondes de surface le long des conducteurs électriques malgré le passage du premier conducteur 20A au deuxième conducteur 20B. Cet effet est obtenu notamment lorsque les conducteurs électriques 20 font partie de la caténaire 18 du réseau électrique ferroviaire.

On conçoit ainsi que le système de communication de données 16 selon l'invention permet d'avoir une distance élevée entre la première antenne d'émission-réception 32 et la deuxième antenne d'émission-réception 34, typiquement une distance supérieure à 1 km, tout en améliorant la facilité de communication des données, la deuxième antenne d'émission-réception 34 étant par exemple fixée à un véhicule ferroviaire 14, en étant couplée au deuxième module d'émission-réception 36 disposé à l'intérieur dudit véhicule ferroviaire.

Ceci permet alors de recevoir les données à l'intérieur du véhicule ferroviaire 14, y compris lorsqu'il est en mouvement le long du réseau électrique ferroviaire 12.

## Revendications

1. Système (16) de communication de données, comprenant :
- un premier module (30) d'émission-réception de données sous forme d'un signal radioélectrique,
- une première antenne radioélectrique d'émission-réception (32), connectée au premier module d'émission-réception (30) et adaptée pour être disposée à proximité d'un conducteur électrique (20 ; 20A, 20B), la première antenne d'émission-réception (32) étant configurée pour émettre, respectivement recevoir, le signal radioélectrique sous forme d'ondes radioélectriques de surface se propageant le long du conducteur électrique (20 ; 20A, 20B),
- une deuxième antenne radioélectrique d'émission-réception (34), et
- un deuxième module d'émission-réception de données (36), adapté pour échanger des données avec le premier module d'émission-réception (30), le deuxième module d'émission-réception (36) étant connecté à la deuxième antenne (34),
**caractérisé en ce que** la deuxième antenne d'émission-réception (34) est destinée à être disposée à l'écart du conducteur électrique (20 ; 20A, 20B),
la deuxième antenne (34) étant configurée pour recevoir des ondes radioélectriques qui, parmi les ondes radioélectriques de surface émises par la première antenne (32), sont rayonnées à l'écart du conducteur électrique (20 ; 20A, 20B) et directement depuis ledit conducteur électrique (20 ; 20A, 20B),
la deuxième antenne (34) étant respectivement configurée pour émettre des ondes radioélectriques, certaines des ondes émises par la deuxième antenne (34) étant destinées à se propager le long du conducteur électrique (20 ; 20A, 20B) sous forme d'ondes radioélectriques de surface, et
**en ce que** la première antenne (32) comporte deux éléments actifs (40), adaptés pour être disposés le long du conducteur électrique (20 ; 20A, 20B) et de part et d'autre dudit conducteur (20 ; 20A, 20B), les éléments actifs (40) présentant chacun un profil courbé suivant un plan vertical parallèle au conducteur électrique (20 ; 20A, 20B).

2. Système de communication (16) selon la revendication 1, dans lequel seule la première antenne (32) est destinée à être disposée à proximité du conducteur électrique (20), de préférence à moins de 20 cm du conducteur électrique.

3. Système de communication (16) selon la revendication 1, dans lequel le système (16) comprend en outre au moins un couple (200) d'antennes relais (202, 204), chaque couple d'antennes relais (200) comportant une première antenne relais d'émission-réception (202) configurée pour recevoir, respectivement retransmettre, des ondes de surface se propageant le long d'un premier conducteur électrique (20A) et une deuxième antenne relais d'émission-réception (204), la deuxième antenne relais (204) étant reliée à la première antenne relais (202) correspondante du couple d'antennes et étant configurée pour retransmettre, respectivement recevoir, des ondes de surface se propageant le long d'un deuxième conducteur électrique (20B), les ondes de surface le long du premier conducteur (20A) correspondant aux ondes de surface le long du deuxième conducteur électrique (20B).

4. Système de communication (16) selon la revendication 3, dans lequel chaque antenne relais (202, 204) comporte deux éléments actifs (40), adaptés pour être disposés le long du conducteur électrique (20A, 20B) et de part et d'autre dudit conducteur (20A, 20B), les éléments actifs (40) présentant chacun un profil courbé suivant un plan vertical parallèle au conducteur électrique (20A, 20B).

5. Système de communication (16) selon l'une quelconque des revendications précédentes, dans lequel le système (16) comprend en outre le conducteur électrique (20 ; 20A, 20B) destiné à être parcouru par un courant électrique, et la première antenne d'émission-réception est disposée à proximité du conducteur électrique (20 ; 20A, 20B), de préférence à sensiblement moins de 20 cm du conducteur électrique (20 ; 20A, 20B).

6. Système de communication (16) selon la revendication 5, dans lequel le conducteur électrique (20 ; 20A, 20B) est un conducteur électrique d'une caténaire (18) d'un réseau ferroviaire (12).

7. Système de communication (16) selon la revendication 5 ou 6, dans lequel la distance entre le conducteur électrique (20 ; 20A, 20B) et la deuxième antenne d'émission-réception (34) est sensiblement comprise entre 50 cm et 150 cm, de préférence sensiblement comprise entre 50 cm et 100 cm.

8. Système de communication (16) selon l'une quelconque des revendications 5 à 7, dans lequel le conducteur électrique (20 ; 20A, 20B) s'étend selon une direction longitudinale (X), et
dans lequel la première antenne d'émission-réception (32) est fixe par rapport au conducteur électrique (20 ; 20A, 20B), et la deuxième antenne d'émission-réception (34) est mobile par rapport au conducteur électrique (20 ; 20A, 20B) selon la direction longitudinale (X).

9. Système de communication (16) selon l'une quelconque des revendications précédentes, dans lequel les éléments actifs (40) sont de forme identique, et sont destinés à être disposés de manière symétrique par rapport à un plan vertical (P) contenant le conducteur (20 ; 20A, 20B).

10. Système de communication (16) selon l'une quelconque des revendications précédentes, dans lequel le profil courbé est concave par rapport au conducteur électrique (20 ; 20A, 20B).

11. Système de communication (16) selon l'une quelconque des revendications précédentes, dans lequel la deuxième antenne d'émission-réception (34) est une antenne directive, et est destinée à être pointée en direction du conducteur électrique (20).

12. Système ferroviaire (10), comprenant :
- un réseau électrique ferroviaire (12) comportant au moins une caténaire (18), chaque caténaire (18) comportant un conducteur électrique (20 ; 20A, 20B),
- au moins un véhicule ferroviaire (14) destiné à se déplacer le long du réseau ferroviaire (12), et
- un système de communication de données (16),
**caractérisé en ce que** le système de communication de données (16) est conforme à l'une quelconque des revendications précédentes.

13. Système ferroviaire (10) selon la revendication 12, dans lequel la première antenne d'émission-réception (32) est configurée pour émettre, respectivement recevoir, le signal radioélectrique sous forme d'ondes de surface se propageant le long du conducteur de la caténaire correspondante, et
dans lequel au moins un véhicule ferroviaire (14) comporte la deuxième antenne radioélectrique d'émission-réception (34) et le deuxième module d'émission-réception de données (36), le deuxième module d'émission-réception (36) étant connecté à la deuxième antenne (34) et adapté pour échanger des données avec le premier module d'émission-réception (30).

14. Procédé de communication de données sous forme d'un signal radioélectrique au sein d'un système de communication de données (16), le système de communication (16) comportant un premier module d'émission-réception de données (30), une première antenne radioélectrique d'émission-réception (32) connectée au premier module d'émission-réception (30), la première antenne d'émission-réception (32) étant disposée à proximité du conducteur électrique (20 ; 20A, 20B), une deuxième antenne radioélectrique d'émission-réception (34) et un deuxième module d'émission-réception de données (36) connecté à la deuxième antenne (34),
le procédé comprenant les étapes suivantes :
- l'émission (100) du signal radioélectrique, via un module parmi le premier module (30) et le deuxième module (36) et via une antenne parmi la première antenne (32) et la deuxième antenne (34),
- la transmission (110) du signal radioélectrique sous forme d'ondes de surface se propageant le long d'un conducteur électrique (20 ; 20A, 20B), et
- la réception (120) dudit signal radioélectrique, via l'autre antenne parmi la première antenne (32) et la deuxième antenne (34) et via l'autre module parmi le premier module (30) et le deuxième module (36),
**caractérisé en ce que** le signal radioélectrique associé à la deuxième antenne (34) est reçu sous forme d'ondes qui, parmi les ondes de surface émises, sont rayonnées à l'écart du conducteur électrique (20 ; 20A, 20B) et directement depuis ledit conducteur électrique (20 ; 20A, 20B), respectivement émis sous forme d'ondes radioélectriques, certaines des ondes émises par la deuxième antenne (34) étant destinées à se propager le long du conducteur électrique (20 ; 20A, 20B) sous forme d'ondes radioélectriques de surface,
la deuxième antenne (34) étant disposée à l'écart du conducteur électrique (20 ; 20A, 20B), et
la première antenne (32) comportant deux éléments actifs (40), adaptés pour être disposés le long du conducteur électrique (20 ; 20A, 20B) et de part et d'autre dudit conducteur (20 ; 20A, 20B), les éléments actifs (40) présentant chacun un profil courbé suivant un plan vertical parallèle au conducteur électrique (20 ; 20A, 20B).

## Patentansprüche

1. System (16) zur Kommunikation von Daten, aufweisend:
- ein erstes Modul (30) zum Senden-Empfangen von Daten in Form eines Funksignals,
- eine erste Senden-Empfangen-Funkantenne (32), die mit dem ersten Senden-Empfangen-Modul (30) verbunden ist und angepasst ist, um in der Nähe eines elektrischen Leiters (20, 20A, 20B) angeordnet zu sein, wobei die erste Senden-Empfangen-Antenne (32) eingerichtet ist zum Senden, beziehungsweise Empfangen, des Funksignals in Form von Oberflächenfunkwellen, die sich entlang des elektrischen Leiters (20, 20A, 20B) ausbreiten,
- eine zweite Senden-Empfangen-Funkantenne (34) und
- ein zweites Daten-Senden-Empfangen-Modul (36), welches angepasst ist zum Austauschen der Daten mit dem ersten Senden-Empfangen-Modul (30), wobei das zweite Senden-Empfangen-Modul (36) mit der zweiten Antenne (34) verbunden ist,
**gekennzeichnet dadurch, dass** die zweite Senden-Empfangen-Antenne (34) dazu bestimmt ist, entfernt von dem elektrischen Leiter (20, 20A, 20B) angeordnet zu sein,
wobei die zweite Antenne (34) eingerichtet ist zum Empfangen von Funkwellen, die von den Oberflächenfunkwellen, die von der ersten Antenne (32) gesendet sind, entfernt von dem elektrischen Leiter (20, 20A, 20B) und direkt ausgehend von dem besagten elektrischen Leiter (20, 20A, 20B) ausgesendet sind,
wobei die zweite Antenne (34) respektive eingerichtet ist zum Senden von Funkwellen, wobei bestimmte der Wellen, die von der zweiten Antenne (34) gesendet sind, dazu bestimmt sind, sich entlang des elektrischen Leiters (20, 20A, 20B) in Form von Oberflächenfunkwellen auszubreiten, und
dadurch, dass die erste Antenne (32) zwei Aktiv-Elemente (40) aufweist, die angepasst sind, um entlang des elektrischen Leiters (20, 20A, 20B) und beiderseits des besagten Leiters (20, 20A, 20B) angeordnet zu sein, wobei die Aktiv-Elemente (40) jeweils ein gekrümmtes Profil entlang einer vertikalen Ebene haben, die parallel zu dem elektrischen Leiter (20, 20A, 20B) ist.

2. Kommunikationssystem (16) gemäß Anspruch 1, in welchem nur die erste Antenne (32) dazu bestimmt ist, in der Nähe des elektrischen Leiters (20), vorzugsweise weniger als 20 cm von dem elektrischen Leiter, angeordnet zu sein.

3. Kommunikationssystem (16) gemäß Anspruch 1, in welchem das System (16) ferner mindestens ein Paar (200) von Relaisantennen (202, 204) aufweist, wobei jedes Paar von Relaisantennen (200) eine erste Senden-Empfangen-Relaisantenne (202), die eingerichtet ist zum Empfangen, beziehungsweise Wiederübertragen, der Oberflächenwellen, die sich entlang des ersten elektrischen Leiters (20A) ausbreiten, und eine zweite Senden-Empfangen-Relaisantenne (204) aufweist, wobei die zweite Relaisantenne (204) an der ersten Relaisantenne (202) angebracht ist, die zu dem Paar von Antennen gehört, und eingerichtet ist zum Wiederübertragen, beziehungsweise Empfangen, der Oberflächenwellen, die sich entlang des zweiten elektrischen Leiters (20B) ausbreiten, wobei die Oberflächenwellen entlang des ersten Leiters (20A) zu den Oberflächenwellen entlang des zweiten elektrischen Leiters (20B) korrespondieren.

4. Kommunikationssystem (16) gemäß Anspruch 3, in welchem jede Relaisantenne (202, 204) zwei Aktiv-Elemente (40) aufweist, die angepasst sind, um entlang des elektrischen Leiters (20A, 20B) und beidseits des besagten Leiters (20A, 20B) angeordnet zu sein, wobei die Aktiv-Elemente (40) jeweils ein gekrümmtes Profil entlang einer vertikalen Ebene haben, die parallel zu dem elektrischen Leiter (20A, 20B) ist.

5. Kommunikationssystem (16) gemäß irgendeinem der vorherigen Ansprüche, in welchem das System (16) ferner den elektrischen Leiter (20, 20A, 20B) aufweist, der dazu bestimmt ist, von einem elektrischen Strom durchlaufen zu sein, und die erste Senden-Empfangen-Antenne in der Nähe des elektrischen Leiters (20, 20A, 20B), vorzugsweise im Wesentlichen weniger als 20 cm von dem elektrischen Leiter (20, 20A, 20B), angeordnet ist.

6. Kommunikationssystem (16) gemäß Anspruch 5, in welchem der elektrische Leiter (20, 20A, 20B) ein elektrischer Leiter einer Fahrleitung (18) eines Schienennetzes (12) ist.

7. Kommunikationssystem (16) gemäß Anspruch 5 oder 6, in welchem der Abstand zwischen dem elektrischen Leiter (20, 20A, 20B) und der zweiten Senden-Empfangen-Antenne (34) im Wesentlichen zwischen 50 cm und 150 cm enthalten, vorzugsweise im Wesentlichen zwischen 50 cm und 100 cm enthalten, ist.

8. Kommunikationssystem (16) gemäß irgendeinem der Ansprüche 5 bis 7, in welchem der elektrische Leiter (20, 20A, 20B) sich entlang einer longitudinalen Richtung (X) erstreckt, und
in welchem die erste Senden-Empfangen-Antenne (32) fest mit Bezug auf den elektrischen Leiter (20, 20A, 20B) ist, und die zweite Senden-Empfangen-Antenne (34) bezüglich des elektrischen Leiters (20, 20A, 20B) entlang der longitudinalen Richtung (X) bewegbar ist.

9. Kommunikationssystem (16) gemäß irgendeinem der vorherigen Ansprüche, in welchem die Aktiv-Elemente (40) von identischer Form sind und dazu bestimmt sind, auf symmetrische Weise mit Bezug auf eine vertikale Ebene (P), welche den Leiter (20, 20A, 20B) enthält, angeordnet zu sein.

10. Kommunikationssystem (16) gemäß irgendeinem der vorherigen Ansprüche, in welchem das gekrümmte Profil konkav mit Bezug auf den elektrischen Leiter (20, 20A, 20B) ist.

11. Kommunikationssystem (16) gemäß irgendeinem der vorherigen Ansprüche, in welchem die zweite Senden-Empfangen-Antenne (34) eine Richtantenne ist und dazu bestimmt ist, in Richtung des elektrischen Leiters (20) gerichtet zu sein.

12. Schienensystem (10), aufweisend:
- ein elektrisches Schienennetz (12), welches mindestens eine Fahrleitung (18) aufweist, wobei jede Fahrleitung (18) einen elektrischen Leiter (20, 20A, 20B) aufweist,
- mindestens ein Schienenfahrzeug (14), welches dazu bestimmt ist, sich entlang des Schienennetzes (12) zu bewegen, und
- ein Datenkommunikationssystem (16),
**gekennzeichnet dadurch, dass** das Datenkommunikationssystem (16) irgendeinem der vorherigen Ansprüche entspricht.

13. Schienensystem (10) gemäß Anspruch 12, in welchem die erste Senden-Empfangen-Antenne (32) eingerichtet ist zum Senden, beziehungsweise Empfangen, des Funksignals in Form von Oberflächenwellen, die sich entlang des Leiters der korrespondierenden Fahrleitung ausbreiten, und
in welchem mindestens ein Schienenfahrzeug (14) die zweite Senden-Empfangen-Funkantenne (34) und das zweite Daten-Senden-Empfangen-Modul (36) aufweist, wobei das zweite Senden-Empfangen-Modul (36) mit der zweiten Antenne (34) verbunden ist und angepasst ist zum Austauschen der Daten mit dem ersten Senden-Empfangen-Modul (30).

14. Verfahren zur Kommunikation von Daten in Form eines Funksignals innerhalb eines Datenkommunikationssystems (16), wobei das Kommunikationssystem (16) ein erstes Daten-Senden-Empfangen-Modul (30), eine erste Senden-Empfangen-Funkantenne (32), die mit dem ersten Senden-Empfangen-Modul (30) verbunden ist, wobei die erste Senden-Empfangen-Antenne (32) in der Nähe des elektrischen Leiters (20, 20A, 20B) angeordnet ist, eine zweite Senden-Empfangen-Funkantenne (34) und ein zweites Daten-Senden-Empfangen-Modul (36), welches mit der zweiten Antenne (34) verbunden ist, aufweist,
wobei das Verfahren die folgenden Schritte aufweist:
- das Senden (100) des Funksignals mittels eines Moduls von dem ersten Modul (30) und dem zweiten Modul (36) und mittels einer Antenne von der ersten Antenne (32) und der zweiten Antenne (34),
- das Übertragen (110) des Funksignals in Form von Oberflächenwellen, die sich entlang eines elektrischen Leiters (20, 20A, 20B) ausbreiten, und
- das Empfangen (120) des besagten Funksignals mittels der anderen Antenne von der ersten Antenne (32) und der zweiten Antenne (34) und mittels des anderen von dem ersten Modul (30) und dem zweiten Modul (36),
**dadurch gekennzeichnet, dass** das Funksignal, das mit der zweiten Antenne (34) verknüpft ist, in der Form von Wellen empfangen wird, die von den gesendeten Oberflächenwellen entfernt von dem elektrischen Leiter (20, 20A, 20B) und direkt ausgehend von dem besagten elektrischen Leiter (20, 20A, 20B) ausgesendet sind, beziehungsweise in der Form von Funkwellen gesendet wird, wobei bestimmte der Wellen, die mittels der zweiten Antenne (34) gesendet werden, dazu bestimmt sind, sich entlang des elektrischen Leiters (20, 20A, 20B) in Form von Oberflächenfunkwellen auszubreiten,
wobei die zweite Antenne (34) entfernt von dem elektrischen Leiter (20, 20A, 20B) angeordnet ist und
wobei die erste Antenne (32) zwei Aktiv-Elemente (40) aufweist, die angepasst sind, um entlang des elektrischen Leiters (20, 20A, 20B) und beidseits des besagten Leiters (20, 20A, 20B) angeordnet zu sein, wobei die Aktiv-Elemente (40) jeweils ein gekrümmtes Profil entlang einer vertikalen Ebene haben, die parallel zu dem elektrischen Leiter (20, 20A, 20B) ist.

## Claims

1. A data communication system (16), comprising:
- a first transceiver module (30) for transmitting data in the form of a radio signal,
- a first radio transceiver antenna (32), connected to the first transceiver module (30) and able to be positioned near an electric conductor (20; 20A, 20B), the first transceiver antenna (32) being configured to transmit, respectively to receive, the radio signal in the form of surface radio waves propagating along the electric conductor (20; 20A, 20B),
- a second radio transceiver antenna (34), and
- a second data transceiver module (36), configured for exchanging data with the first transceiver module (30), the second transceiver module (36) being connected to the second antenna (34),
**characterized in that** the second transceiver antenna (34) is designed to be positioned away from the electric conductor (20; 20A, 20B),
the second antenna (34) being configured to receive radio waves which, among the surface radio waves transmitted by the first antenna (32), are radiated away from the electric conductor (20; 20A, 20B) and directly from said electric conductor (20; 20A, 20B),
the second antenna (34) being configured to emit radio waves, some of the radio waves transmitted by the second antenna (34) being designed to propagate along the electric conductor (20; 20A, 20B) in the form of radio surface waves, and
**in that** the first antenna (32) comprises two active elements (40), configured for being positioned along the electric conductor (20; 20A, 20B) and on either side of said conductor (20; 20A, 20B), the active elements (40) each having a curved profile along a vertical plane parallel to the electric conductor (20; 20A, 20B).

2. The data communication system (16) according to claim 1, wherein only the first transceiver antenna (32) is designed to be positioned near the electric conductor (20), preferably at less than 20 cm from the electrical conductor.

3. The data communication system (16) according to claim 1, wherein the system (16) further comprises at least one pair (200) of relay antennas (202, 204), each pair of relay antennas (200) comprising a first transceiver relay antenna (202) configured to receive, respectively to retransmit, surface waves propagating along a first electric conductor (20A) and a second transceiver relay antenna (204), the second relay antenna (204) being connected to the first corresponding relay antenna (202) of the pair of antennas and being configured to retransmit, respectively to receive, surface waves propagating along a second electric conductor (20B), the surface waves along the first conductor (20A) corresponding to the surface waves along the second electric conductor (20B).

4. The data communication system (16) according to claim 3, wherein each relay antenna (202, 204) comprises two active elements (40), configured for being positioned along the electric conductor (20A, 20B) and on either side of said conductor (20A, 20B), the active elements (40) each having a curved profile along a vertical plane parallel to the electric conductor (20A, 20B).

5. The data communication system (16) according to any one of the preceding claims, wherein the system (16) further comprises the electric conductor (20; 20A, 20B) designed to be traveled by an electric current, and the first transceiver antenna is positioned near the electric conductor (20; 20A, 20B), preferably at substantially less than 20 cm from the electrical conductor (20; 20A, 20B).

6. The data communication system (16) according to claim 5, wherein the electric conductor (20; 20A, 20B) is an electric conductor of a catenary system (18) of a railway network (12).

7. The data communication system (16) according to claim 5 or 6, wherein the distance between the electric conductor (20; 20A, 20B) and the second transceiver antenna (34) is substantially comprised between 50 cm and 150 cm, preferably substantially comprised between 50 cm and 100 cm.

8. The data communication system (16) according to any one of claims 5 to 7, wherein the electric conductor (20; 20A, 20B) extends in a longitudinal direction (X), and
wherein the first transceiver antenna (32) is stationary relative to the electric conductor (20; 20A, 20B), and the second transceiver antenna (34) is movable relative to the electric conductor (20; 20A, 20B) in the longitudinal direction (X).

9. The data communication system (16) according to any one of the preceding claims, wherein the active elements (40) have an identical shape, and are designed to be positioned symmetrically relative to a vertical plane (P) containing the conductor (20; 20A, 20B).

10. The data communication system (16) according to any one of the preceding claims, wherein the curved profile is concave relative to the electric conductor (20; 20A, 20B).

11. The data communication system (16) according to any one of the preceding claims, wherein the second transceiver antenna (34) is a directional antenna, and is designed to be pointed toward the electric conductor (20).

12. A railway system (10), comprising:
- an electric railway network (12) comprising at least one catenary system (18), each catenary system (18) comprising an electric conductor (20; 20A, 20B),
- at least one railway vehicle (14) designed to move along the railway network (12), and
- a data communication system (16),
**characterized in that** the data communication system (16) is according to any one of the preceding claims.

13. The railway (10) according to claim 12, wherein the first transceiver antenna (32) is configured to transmit, respectively to receive, the radio signal in the form of surface waves propagating along the conductor of the corresponding catenary system, and
wherein at least one railway vehicle (14) comprises the second radio transceiver antenna (34) and the second data transceiver module (36), the second transceiver module (36) being connected to the second antenna (34) and configured for exchanging data with the first transceiver module (30).

14. A method for communicating data in the form of a radio signal within a data communication system (16), the data communication system (16) comprising a first data transceiver module (30), a first radio transceiver antenna (32) connected to the first transceiver module (30), the first transceiver antenna (32) being positioned near the electric conductor (20; 20A, 20B), a second radio transceiver antenna (34) and a second data transceiver module (36) connected to the second antenna (34),
the method comprising the following steps:
- transmitting (100) the radio signal, via one module among the first module (30) and the second module (36) and via one antenna among the first antenna (32) and the second antenna (34),
- transmitting (110) the radio signal in the form of surface waves propagating along the electric conductor (20; 20A, 20B), and
- receiving (120) said radio signal, via the other antenna from among the first antenna (32) and the second antenna (34) and via the other module from among the first module (30) and the second module (36),
**characterized in that** the radio signal associated with the second antenna (34) is received in the form of waves which, among the transmitted surface waves, are radiated away from the electric conductor (20; 20A, 20B) and directly from said electric conductor (20; 20A, 20B), respectively transmitted in the form of radio waves, some of the waves transmitted by the second antenna (34) being designed to propagate along the electric conductor (20; 20A, 20B) in the form of radio surface waves,
the second antenna (34) being positioned away from the electric conductor (20; 20A, 20B), and
the first antenna (32) comprising two active elements (40), configured for being positioned along the electric conductor (20; 20A, 20B) and on either side of said conductor (20; 20A, 20B), the active elements (40) each having a curved profile along a vertical plane parallel to the electric conductor (20; 20A, 20B).
